# EUROPÄISCHE PATENTANMELDUNG

(11) **EP 2 290 593 A1**
(43) Veröffentlichungstag der Anmeldung: **02.03.2011**
(21) Anmeldenummer: 10000826.7
(22) Anmeldetag: 27.01.2010
(51) Int. Cl.: G06Q 10/00, G05B 17/00, G06F 17/50

(54) **Verfahren zur Unterstützung einer Planung einer technischen Anlage**

(30) Priorität: 31.08.2009 EP 09011179
(71) Anmelder: SIEMENS AKTIENGESELLSCHAFT, 80333 München (DE)
(72) Erfinder: Ehben, Thomas, 91085 Weisendorf (DE); Tetzner, Thilo, 90491 Nürnberg (DE)

(57) **Zusammenfassung**

Es wird ein Verfahren bzw. eine Softwareanwendung vorgestellt, mit der Artefakte von technischen Anlagen den für ihre Erstellung erforderlichen Arbeitsschritten zugeordnet werden. Diese Zuordnungen werden als Annotationen bezeichnet, wobei das Verfahren eine Art Editor für die Annotationen bereitstellt. Ein wesentlicher Bestandteil ist hierbei eine graphische Benutzerschnittstelle. Mit ihr können die Artefakte (z.B. Dokumente, welche Strukturelemente beschreiben) der technischen Anlage sowie einzelne Arbeitsschritte (bzw. ganze Arbeitsabläufe) visualisiert und die Annotationen zwischen beiden beispielsweise graphisch oder tabellarisch eingegeben und bearbeitet werden. Bereits vorhandenes Domänen- und Gewerke-Fachwissen im Anlagenbau wird durch Einsatz des Verfahrens erfasst, aufbereitet, konserviert und vermittelt. Ein weiterer Vorteil liegt in einer effektiven Unterstützung eines Dokumenten- und Konfigurationsmanagements durch das Verfahren. CAD- und Projektleitungstools werden zu einer systematischen IT-Landschaft ohne Medienbrüche integriert. Die Vorhersagbarkeit der Projektplanung und -leitung wird verbessert, da Risiken besser identifiziert und durch Anpassung der vorgeplanten Projektabwicklung umgangen werden können. Weiterhin lassen sich durch das Verfahren Zusammenhänge der Abwicklung großer Projekte im Anlagenbau allgemein verständlich darstellen und interdisziplinär kommunizieren.

## Beschreibung

Im industriellen Anlagenbau ist es erforderlich, Komponenten und Module zu einer kundenspezifischen technischen Anlage zusammenzustellen. Bei der technischen Anlage handelt es sich beispielsweise um Industrieanlagen, Fabriken, Kraftwerke, Anlagen zur Strom-, Wasser- und Gasverteilung oder auch Öl- und Gaspipelines. Diese technischen Anlagen enthalten zu einem großen Teil individuelle Einzelsysteme und Nebengewerke.

Gewerke bzw. Nebengewerke umfassen spezifische technische und ggf. auch nichttechnische, etwa kaufmännische Aktivitäten, welche notwendig sind, um eine technische Anlage (z.B. ein Walzwerk) oder ein industrielles Produkt (z.B. eine zugekaufte Schweißmaschine für ein Walzwerk) über deren gesamten Lebenszyklus zu planen, zu entwickeln, zu produzieren bzw. zu realisieren, und zu betreiben. Gewerke bezeichnen daher neben Aktivitäten, die Ingenieurwissen voraussetzen, insbesondere auch Spezialwissen eines Fachbereiches mit all seinen Facetten (wie Marketing, Entwicklung, Inbetriebsetzung, Betrieb, Wartung). Nebengewerke bezeichnen Gewerke, welche in der technischen Anlage eine untergeordnete Rolle einnehmen oder eine Hilfsfunktion ausüben.

Bei der Planung einer technischen Anlage spielen häufig z.B. die folgenden Gewerke eine Rolle: Elektrotechnik, Maschinenbau und Automatisierungstechnik. Als Nebengewerke sind etwa Gebäudetechnik, Sicherheitstechnik, Pneumatik und Hydraulik zu nennen.

Das Geschäft des Anlagenbaus unterscheidet im Wesentlichen zwei Arbeitsphasen. Auftragsunabhängige Vorarbeiten finden während einer ersten Phase in Büros eines Anlagenbauers statt. Dort werden allgemein gültige Arbeitsschritte und wieder verwendbare Engineering-Artefakte erdacht und vorbereitet, wodurch Wissen für den Anlagenbau erzeugt und verwaltet wird.

Sobald der Anlagenbauer einen Kundenauftrag für einen Bau einer konkreten technischen Anlage erhält, wird eine zweite Phase mit auftragsabhängigen Planungsarbeiten aktiviert. Sie beginnt mit einer Festlegung von Eckdaten der technischen Anlage, einer Ausarbeitung von Spezifikationen und einer planerischen Ausgestaltung aller Teile der technischen Anlage. Auch diese Aktivitäten sind hauptsächlich mit Büroarbeit verbunden. Im weiteren Projektablauf der zweiten Phase gibt es meist einen fließenden Übergang von der Planung zur Errichtung der technischen Anlage. Die technische Anlage wird dabei vor Ort bei einem Kunden physikalisch erstellt, in Betrieb genommen und an den Kunden übergeben.

Beide Phasen werden heute durch eine Vielzahl von problem-und gewerke-orientierten IT- und Softwaretools unterstützt. Zum Einsatz kommen vor allem Anwendungen für CAD, PLM, Projekt- und Dokumentenmanagement. Diese Anwendungen arbeiten jedoch weitgehend unabhängig voneinander und sind nicht integriert oder vernetzt, sodass ein sinnvolles Zusammenwirken nur durch die Kooperation und Erfahrung von Mitarbeitern des Anlagenbauers möglich ist.

Bei Artefakten handelt es sich um physikalische und ideelle Bestandteile der technischen Anlage. Diese liegen entweder als Dokumente vor oder sie werden durch Dokumente repräsentiert. Beispiele für Artefakte sind Baupläne, Schaltpläne, Computerprogramme, Dokumentationen, Protokolle oder Genehmigungsurkunden.

Der Erfindung liegt die Aufgabe zugrunde, ein Verfahren zur Unterstützung einer Planung einer technischen Anlage anzugeben, welches einen Zeitaufwand bei der Planung der technischen Anlage verringert.

Diese Aufgabe wird erfindungsgemäß dadurch gelöst, dass ein Mikroprozessor programmiert ist, um Artefakte der technischen Anlage Arbeitsschritten, welche für eine Erstellung der Artefakte erforderlich sind, zuzuordnen, indem Annotationen erstellt werden. Weiterhin ist der Mikroprozessor programmiert, es einem Benutzer zu ermöglichen, die Annotationen mithilfe einer graphischen Benutzerschnittstelle zu erfassen und zu bearbeiten.

Es wird somit ein Verfahren bzw. eine Softwareanwendung vorgestellt, mit der Artefakte von technischen Anlagen den für ihre Erstellung erforderlichen Arbeitsschritten zugeordnet werden können. Diese Zuordnungen werden als Annotationen bezeichnet, wobei das Verfahren eine Art Editor für die Annotationen bereitstellt.

Ein wesentlicher Bestandteil ist hierbei die graphische Benutzerschnittstelle. Mit ihr können die Artefakte (z.B. Dokumente, welche Strukturelemente beschreiben) der technischen Anlage sowie einzelne Arbeitsschritte (bzw. ganze Arbeitsabläufe) visualisiert und die Annotationen zwischen beiden beispielsweise graphisch oder tabellarisch eingegeben und bearbeitet werden. Sowohl die Artefakte als auch die Arbeitsschritte werden dabei gegebenenfalls hierarchisch gegliedert dargestellt. Grundfunktionen sind weiterhin ein Erstellen, Ändern und Löschen von Annotationen.

Bereits vorhandenes Domänen- und Gewerke-Fachwissen im Anlagenbau wird durch Einsatz des Verfahrens erfasst, aufbereitet, konserviert und vermittelt. Für den Anlagenbauer wird somit ein Wissensmanagement ermöglicht. Organisationsübergreifend ergeben sich neue Möglichkeiten, existierendes Fachwissen zu kommerzialisieren. So lassen sich beispielsweise Annotationsbibliotheken als Einzelprodukt oder als Ergänzung zu Anlagenkomponenten verkaufen.

Ein weiterer Vorteil liegt in einer effektiven Unterstützung eines Dokumenten- und Konfigurationsmanagements durch das Verfahren. CAD- und Projektleitungstools werden zu einer systematischen IT-Landschaft ohne Medienbrüche integriert. Die Vorhersagbarkeit der Projektplanung und -leitung wird verbessert, da Risiken besser identifiziert und durch Anpassung der vorgeplanten Projektabwicklung umgangen werden können.

Weiterhin lassen sich durch das Verfahren Zusammenhänge der Abwicklung großer Projekte im Anlagenbau allgemein verständlich darstellen und interdisziplinär kommunizieren.

Für sich genommen waren CAD- und Projektleitungs-Anwendungen bereits bisher weit entwickelt und etabliert. Die im Anlagenbau verwendeten Anwendungen waren jedoch nicht explizit miteinander vernetzt, sodass für Planung und Bau der technischen Anlage erforderliche Arbeitsschritte außerhalb dieser Anwendungen festgelegt werden mussten. Die bekannten Anwendungen arbeiteten je nach Gewerk in ihren eigenen Strukturen. Bestehende Zuordnungen von Arbeitsschritten (bzw. Arbeitsabläufen) zu Anlagenteilen (bzw. deren Artefakten) sind daher historisch gewachsen und waren gängige Praxis. Eine digitale Verbindung zur Struktur der technischen Anlage existierte dabei nicht. Ihre Verfügbarkeit und Qualität hing somit im Wesentlichen von der Erfahrung der Mitarbeiter ab. All diese Nachteile werden durch das Verfahren verringert oder behoben.

In einer Weiterbildung bilden ein oder mehrere Artefakte jeweils ein mechatronisches Objekt. Existierende PLM-Modelle können so durch die Annotationen als vollständige mechatronische Objekte gehandhabt werden. Durch die Integration von PLM- und Arbeitsablauf-Modellen wird eine Realisierung integraler mechatronischer Objekte unterstützt.

Weitere vorteilhafte Ausführungsformen sind durch die Merkmale der Unteransprüche gekennzeichnet.

Neben dem soeben beschriebenen Verfahren umfasst die Erfindung ferner einen computerlesbaren Datenträger, auf dem ein Computerprogramm gespeichert ist, welches eines der soeben beschriebenen Verfahren ausführt, wenn es in einem Computer abgearbeitet wird.

Weiterhin umfasst die Erfindung ein Computerprogramm, das in einem Computer abgearbeitet wird und dabei eines der zuvor beschriebenen Verfahren ausführt.

Im Folgenden werden Ausführungsbeispiele der Erfindung anhand von Figuren näher erläutert. Es zeigen:
- Figur 1: einen Überblick über das Verfahren,
- Figur 2: Annotationen in einer ersten Darstellungsvariante,
- Figur 3: Annotationen in einer zweiten Darstellungsvariante,
- Figur 4: einen Computer, auf dem das Verfahren ausgeführt wird.

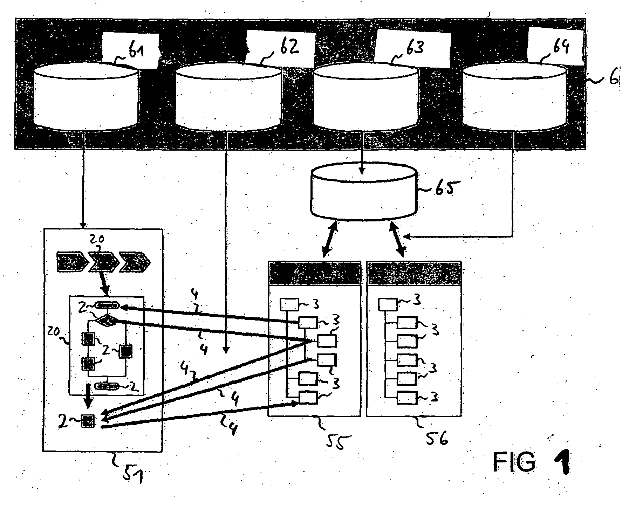

Figur 1 zeigt das Verfahren zur Unterstützung einer Planung einer technischen Anlage sowie einige optionale Erweiterungen. Im linken Teil von Figur 1 ist eine Arbeitsablauf-Sicht 51 gezeigt, in welcher Arbeitsabläufe, welche für die Planung und Errichtung der technischen Anlage erforderlich sind, visuell dargestellt werden. Gezeigt ist unter anderem ein Arbeitspaket 20, welches im oberen Teil der Arbeitsablauf-Sicht 51 in einer Kette von Arbeitspaketen angeordnet ist. Im mittleren Teil der Arbeitsablauf-Sicht 51 ist das Arbeitspaket 20 im Detail gezeigt. Das Arbeitspaket 20 enthält einen Arbeitsablauf, welcher aus Arbeitsschritten 2 besteht.

Rechts neben der Arbeitsablauf-Sicht 51 sind eine erste technische Sicht 55 sowie eine zweite technische Sicht 56 dargestellt. Die erste technische Sicht 55 und die zweite technische Sicht 56 enthalten jeweils Artefakte 3 in hierarchischer Anordnung. Gemäß dem Verfahren werden nun diejenigen Arbeitsschritte 2, welche für eine Erstellung der Artefakte 3 erforderlich sind, diesen zugeordnet. Hierzu werden Annotationen 4 erstellt, welche ebenfalls in Figur 1 gezeigt sind. Die beschriebenen Elemente aus Figur 1 werden hierzu auf einer graphischen Benutzerschnittstelle dargestellt, so dass ein Benutzer die Annotationen 4 erfassen und bearbeiten kann.

Figur 1 zeigt weitere, optionale Bestandteile des Verfahrens. Im oberen Teil sichtbar ist ein Domänen-Wissensspeicher 6, welcher Wissen aus dem Anlagenbau speichert und für zukünftige Projekte bereit stellt. Er umfasst hierzu ein Arbeitsablauf-Metamodell 61, welches als Vorlage für das Arbeitspaket 20 und die Arbeitsschritte 2 dient. Ferner enthält der Domänen-Wissensspeicher 6 ein Annotations-Metamodell 62, welches als Vorlage für die Annotationen 4 dient. Drittens umfasst der Domänen-Wissensspeicher 6 eine Projekt-Vorlage 63. Mit Hilfe dieser wird eine Projekt-Datenbasis 65 generiert, deren Inhalte durch die erste technische Sicht 55 sowie die zweite technische Sicht 56 visualisierbar sind. Bei der Visualisierung werden weiterhin Transformationsvorschriften 64 berücksichtigt, welche im Domänen-Wissensspeicher 6 zusätzlich enthalten sind.

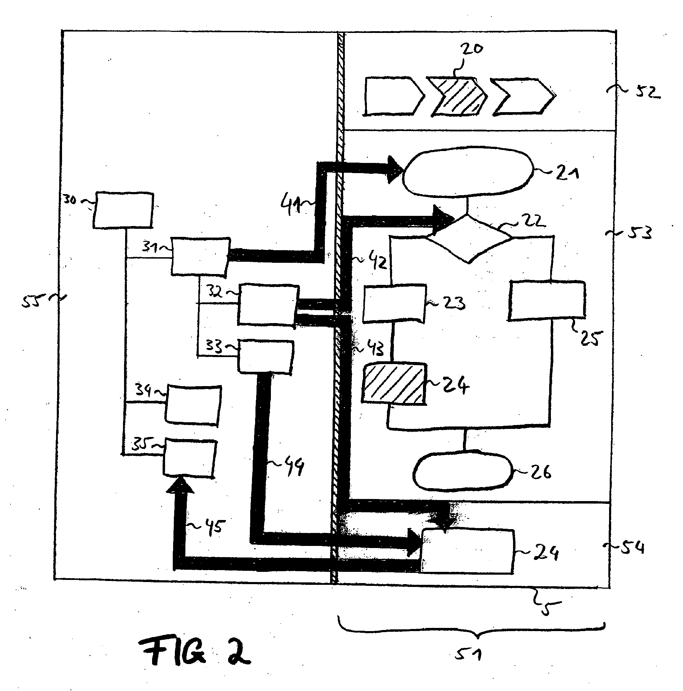

Figur 2 zeigt in der linken Hälfte die erste technische Sicht 55 aus Figur 1 im Detail sowie in der rechten Hälfte die Arbeitsablauf-Sicht 51 aus Figur 1 im Detail. Die erste technische Sicht 55 umfasst hierbei ein Objekt 30, welches sich hierarchisch in ein erstes Artefakt 31, ein zweites Artefakt 32, ein drittes Artefakt 33, ein viertes Artefakt 34 sowie ein fünftes Artefakt 35 zerlegt. Die Arbeitsablauf-Sicht 51 zerlegt sich in drei Abschnitte. Die Arbeitspaket-Sicht 52 oben zeigt komplette Arbeitspakete, unter anderem das Arbeitspaket 20. Die Arbeitsablauf-Detailsicht 53 zeigt jeweils einen Arbeitsablauf im Detail, aus dem das jeweilige Arbeitspaket, hier das Arbeitspaket 20, besteht. Die Arbeitsschritt-Sicht 54 enthält einen einzelnen Arbeitsschritt aus der Arbeitsablauf-Detailsicht 53. Die Arbeitsablauf-Detailsicht 53 zeigt als Arbeitsablauf zunächst einen Beginn 21, gefolgt von einer Entscheidung 22, welche im ersten Fall zu einem ersten Arbeitsschritt 23 und einem zweiten Arbeitsschritt 24 sowie im zweiten Fall zu einem dritten Arbeitsschritt 25 führt. Der Arbeitsablauf endet mit einem Ende 26. Weiterhin zeigt Figur 2 eine erste Eingabe-Annotation 41, eine zweite Eingabe-Annotation 42, eine dritte Eingabe-Annotation 43 und eine vierte Eingabe-Annotation 44. Die Eingabe-Annotationen zeigen jeweils, welche Artefakte in der ersten technischen Sicht 55 für einen Arbeitsschritt in der Arbeitsablauf-Detailsicht 53 oder der Arbeitsschritt-Sicht 54 erforderlich sind. So ist das erste Artefakt 31 für den Beginn 21 des Arbeitsablaufes erforderlich. Das zweite Artefakt 32 ist für die Entscheidung 22 sowie den zweiten Arbeitsschritt 24 erforderlich. Das dritte Artefakt 33 ist ebenfalls Voraussetzung für den zweiten Arbeitsschritt 24.

Figur 2 zeigt ferner eine Ausgabe-Annotation 45, welche angibt, welches Artefakt durch welchen Arbeitsschritt erstellt wird. Gemäß Figur 2 wird das fünfte Artefakt 35 durch den zweiten Arbeitsschritt 24 erstellt.

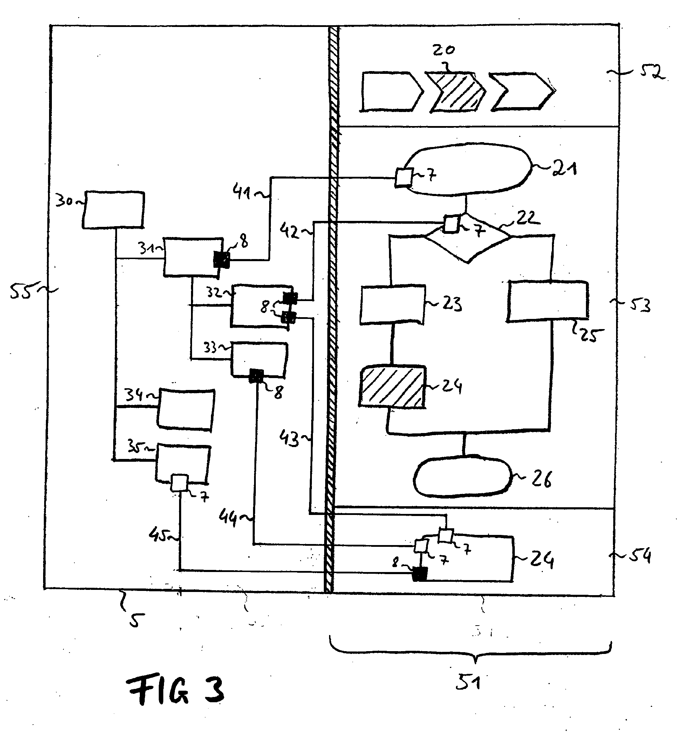

Figur 3 zeigt eine alternative Darstellung der Annotationen aus Figur 2. Gleiche Bezugszeichen bezeichnen hierbei die gleichen Elemente wie in Figur 2. Für die Darstellung der ersten Eingabe-Annotation 41, der zweiten Eingabe-Annotation 42, der dritten Eingabe-Annotation 43 und der vierten Eingabe-Annotation 44 wird eine alternative Darstellung gewählt. So wird das jeweilige Artefakt mit einem Ausgabe-Port 8 in der visuellen Darstellung ergänzt. Der zugehörige Arbeitsschritt wird um einen Eingabe-Port 7 erweitert. Die Annotation verbindet hierbei den Ausgabe-Port 8 mit dem Eingabe-Port 7. Für die Darstellung der Ausgabe-Annotation 45 wird der zweite Arbeitsschritt 24 mit dem Ausgabe-Port 8 versehen. Das fünfte Artefakt 35 wird mit dem Eingabe-Port 7 versehen. Anhand der unterschiedlichen Darstellung des Eingabe-Ports 7 (in Figur 3 als leeres Quadrat) und des Ausgabe-Ports 8 (in Figur 3 als schwarz gefülltes Quadrat) lässt sich unterscheiden, ob es sich um eine Eingabe-Annotation oder um eine Ausgabe-Annotation handelt.

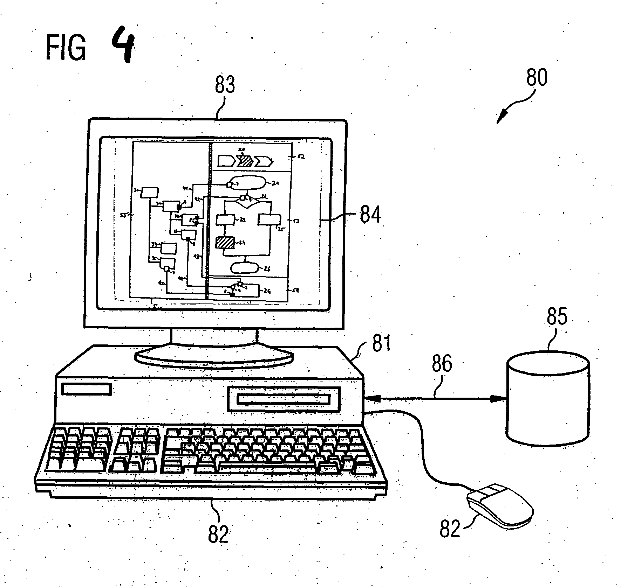

Figur 4 zeigt ein System 80, auf dem das Verfahren ausgeführt wird. Das System 80 umfasst einen Computer 81, beispielsweise einen PC, Laptop oder ein PDA. Auf einem Bildschirm 83 des Computers 81 befindet sich eine Benutzeroberfläche 84, welche den Inhalt von Figur 3 dargestellt. Der Computer 81 verfügt ferner über Eingabegeräte 82, beispielsweise Tastatur und Maus, sowie über einen Speicher 85, beispielsweise einen Speicher auf einem Server oder einen lokalen Speicher. Der Speicher 85 ist über eine Datenverbindung 86 mit dem Computer 81 verbunden.

Im Folgenden wird erneut auf Figur 1 Bezug genommen. Bei den zuvor beschriebenen Darstellungen bietet es sich an, bekannte Darstellungs- und Interaktions-Standards graphischer Editoren zu implementieren. Hierzu zählt beispielsweise ein selektives Darstellen oder Ausblenden von Hierarchieebenen sowohl in der Arbeitsablauf-Sicht 51, als auch in der ersten technischen Sicht 55. Weiterhin ist es von Vorteil, die jeweiligen Inhalte in Bibliotheken abzulegen. Die Annotationen 4 werden vorzugsweise als Gummibandlinien (englische Bezeichnung: Flylines) dargestellt. Hierbei bietet sich eine automatische Umwandlung in achsparallele, überschneidungsfreie Liniensegmente an (sog. Autorouting). Kommentare können ein- und ausgeblendet werden. Entsprechend der gängigen Praxis werden Artefakte 3 als Blöcke und Arbeitspakete wie das Arbeitspaket 20 als Blockpfeile dargestellt. Hiervon kann natürlich auch abgewichen werden. Die Annotationen 4 werden als Linien, optional mit Pfeilspitzen, dargestellt. Sowohl die Artefakte 3 als auch die Arbeitsschritte 2 können mit Andockstellen (dem in Figur 3 gezeigten Eingabe-Port 7 und Ausgabe-Port 8) versehen werden, an denen sie dann mit den Linien für die Annotationen 4 verbunden werden.

Wegen der hohen Komplexität und der großen Zahl von Abhängigkeiten ist weiterhin als Weiterbildung eine dreidimensionale Darstellung der Annotationen 4, gegebenenfalls auch der Artefakte 3 und Arbeitsschritte 2, wünschenswert, durch welche ein Benutzer virtuell navigieren kann. Der Vorteil liegt hierbei in größerer Übersichtlichkeit und Intuitivität.

Gemäß einer Weiterbildung wird das in Figur 1 gezeigte Annotations-Metamodell 62 als Vorlage zur Erstellung der Annotationen 4 verwendet. Beispielsweise kann das Verfahren Mittel für einen Benutzer bereitstellen, um ein solches Annotations-Metamodell 62 zu definieren. Das Annotations-Metamodell 62 dient hierbei zur Festlegung von Grenzen von Multiplizitäten beziehungsweise Kardinalitäten, wie sie dem Fachmann aus Datenbanken bekannt sind. So kann beispielsweise festgelegt werden, dass ein Arbeitsschritt 2 immer genau ein Artefakt 3 zum Ergebnis haben muss, aber von beliebig vielen Artefakten 3 als Informationsquellen abhängig sein kann. Eine andere Einschränkung wäre beispielsweise, dass Annotationen 4 nur zwischen Arbeitsschritte 2 und Artefakten 3 auf den jeweils untersten darstellbaren Hierarchieebenen bestehen dürfen.

In einer Weiterbildung des Verfahrens werden die Annotationen 4 auf Konformität mit dem mindestens einen Annotations-Metamodell 62 geprüft. Hierzu prüfen geeignete Algorithmen in regelmäßigen Abständen (oder initiiert durch eine Aufforderung eines Benutzers) die Annotationen 4 auf formale Konformität mit dem einen (oder mehreren) definierten Annotations-Metamodellen 62.

Das Verfahren kann als eigenständiges Computerprogramm oder auch als Plugin für bestehende CAD- und Projektleitungsanwendungen ausgeführt sein. Über geeignete Softwareschnittstellen greift der hierzu erforderliche Programm-Code auf Datenbestände in den CAD- und Projektleitungsanwendungen zu. Als datentechnische Verbindung zu diesen externen Datenbeständen eignen sich hierbei Referenzen und/oder URIs (Abkürzung für die englische Bezeichnung "Uniform Resource Identifier").

Die Annotationen 4 und das mindestens eine Annotations-Metamodell 62 werden beispielsweise in XML oder einem daraus abgeleiteten Format abgespeichert. Dies hat den Vorteil, dass das Annotations-Metamodell 62 und die Annotationen 4 organisations- und herstellerunabhängig gelesen und verwendet werden können.

Die Arbeitsschritte 2 und Artefakte 3 lassen sich mittels standardisierter Sinnbilder darstellen, wie sie zum Beispiel aus Beschreibungssprachen wie UML oder SysML sowie aus Prozessmodellierungsstandards nach ARIS bekannt sind.

Weiterhin bietet es sich an, die Annotationen 4 durch geeignete Algorithmen weiteren formalen sowie inhaltlichen Analysen zu unterziehen. Hierzu zählen beispielsweise eine Prüfung auf eine Konsistenz der Annotationen 4. Folgende Inkonsistenzen können hierbei beispielsweise ermittelt werden:
- Unauflösbare Zirkelbezüge,
- Arbeitsschritte 2, welche in kein Artefakt 3 münden,
- Artefakte 3, welchen keine Arbeitsschritte 2 zugeordnet sind.

Weiterhin lassen sich Hotspots beziehungsweise Bottlenecks wie sie dem Fachmann im Kontext von Datenbanken bekannt sind identifizieren, beispielsweise kritische Schlüsselkomponenten unter den Artefakten 3, Arbeitsschritte 2 beziehungsweise Arbeitspakete von zentraler Bedeutung, Ressourcen-Engpässe, Risikohäufungen und kritische Pfade im Zeitplan.

Für ein Dokumentenmanagement lassen sich alle Dokumente zusammenstellen, welche direkt und/oder indirekt für ein bestimmtes Artefakt 3 oder einen bestimmten Arbeitsschritt 2 relevant sind.

Weiterhin kann für ein Konfigurationsmanagement der Arbeitsstand aller Arbeitspakete, welche direkt oder indirekt mit einem Arbeitsschritt 2 oder einem Artefakt 3 verbunden sind, zusammengestellt werden.

Das Verfahren kann in verschiedenen Phasen des Anlagenbaus eingesetzt werden. Bei auftragsunabhängigen Tätigkeiten im Vorfeld dient es zur Festlegung und Optimierung der Annotationen 4. Hierbei entsteht ein integrierter Arbeits- und Strukturplan. Dieser ist allgemein gültig für eine zuvor festgelegte Bandbreite von technischen Anlagen. In den späteren auftragsabhängigen Phasen hilft das Verfahren bei der Projektplanung, indem es bei der Identifikation von Dokumenten hilft, die für eine bestimmte Strukturkomponente (repräsentiert durch ein oder mehrere Artefakte 3) der technischen Anlage erforderlich sind. Weiterhin unterstützt es ein Dokumenten- und Konfigurationsmanagement. So lässt sich beispielsweise bestimmen, ob für einen bevorstehenden Arbeitsschritt 2 alle erforderlichen Artefakte 3 existieren oder welcher Dokumentenstand aufgrund der bereits bearbeiteten Arbeitsschritte 2 aktuell vorliegt.

## Patentansprüche

1. Verfahren zur Unterstützung einer Planung einer technischen Anlage, bei dem ein Mikroprozessor programmiert ist, um
- Artefakte (3) der technischen Anlage Arbeitsschritten (2), welche für eine Erstellung der Artefakte (3) erforderlich sind, zuzuordnen, indem Annotationen (4) erstellt werden, und
- einem Benutzer zu ermöglichen, die Annotationen (4) mithilfe einer graphischen Benutzerschnittstelle (5) zu erfassen und zu bearbeiten.

2. Verfahren nach Anspruch 1,
- bei dem ein oder mehrere Artefakte (3) jeweils ein mechatronisches Objekt bilden.

3. Verfahren nach Anspruch 1,
- bei dem Eingabe-Annotationen (41, 42, 43, 44) angeben, welche Artefakte (3) für einen Arbeitsschritt (2) erforderlich sind, und
- bei dem Ausgabe-Annotationen (45) angeben, welche Artefakte (3) durch welche Arbeitsschritte (2) erstellt werden.

4. Verfahren nach Anspruch 1,
- bei dem die Annotationen (4) durch die graphische Benutzerschnittstelle (5) dreidimensional dargestellt werden.

5. Verfahren nach Anspruch 1,
- bei dem mindestens ein Annotations-Metamodell (62) als Vorlage zur Erstellung der Annotationen (4) verwendet wird.

6. Verfahren nach Anspruch 5,
- bei dem die Annotationen (4) rechnergestützt auf Konformität mit dem mindestens einen Annotations-Metamodell (62) geprüft werden.

7. Verfahren nach Anspruch 5,
- bei dem die Annotationen (4) und das mindestens eine Annotations-Metamodell (62) in XML oder einem daraus abgeleiteten Format abgespeichert werden.

8. Verfahren nach Anspruch 1, bei dem die Annotationen (4) rechnergestützt geprüft werden auf Hotspots, Flaschenhälse oder Inkonsistenzen, insbesondere
- unauflösbare Zirkelbezüge,
- Arbeitsschritte (2), die in kein Artefakt (3) münden, oder
- Artefakte (3), denen keine Arbeitsschritte (2) zugeordnet sind.

9. Computerlesbarer Datenträger,
- auf dem ein Computerprogramm gespeichert ist, welches das Verfahren nach einem der vorangegangenen Ansprüche ausführt, wenn es in einem Computer abgearbeitet wird.

10. Computerprogramm,
welches in einem Computer abgearbeitet wird und dabei das Verfahren nach einem der Ansprüche 1 bis 8 ausführt.
